# EUROPÄISCHE PATENTANMELDUNG

(11) **EP 0 589 303 A1**
(43) Veröffentlichungstag der Anmeldung: **30.03.1994**
(21) Anmeldenummer: 93114556.9
(22) Anmeldetag: 10.09.1993
(51) Int. Cl.: A23L 3/30, A23L 3/3454

(54) **Verfahren zum Abtöten von Enterobakterien**

(30) Priorität: 24.09.1992 DE 4231932
(71) Anmelder: MARTIN WALTER ULTRASCHALLTECHNIK GmbH, D-75334 Straubenhardt (DE)
(72) Erfinder: Walter, Martin, D-75334 Straubenhardt (DE)
(74) Vertreter: Trappenberg, Hans

(57) **Zusammenfassung**

Enterobakterien, und hier insbesondere die Salmonellen, führen immer wieder zu für Mensch und Tier gefährlichen Infektionskrankheiten. Überraschenderweise hat sich gezeigt, daß eine kurzzeitige Beschallung der Lebensmitteln mit einer Ultraschallfrequenz zwischen 10 kHz und 100 kHz zu einer Abtötung dieser krankheitsverursachenden Bakterien führt.

## Beschreibung

Enterobakterien, und hier insbesondere die Salmonellen (salmonella), fuhren immer wieder, sporadisch sogar gehäuft, zu Infektionskrankheiten bei Menschen wie auch bei Tieren. Die Infektionsquellen dieser Salmonellosen genannten Infektionskrankheiten sind Menschen und Tiere, die diese Bakterien ausscheiden. Die Übertragung erfolgt ausschließlich auf oralem Wege, meist über verunreinigte Nahrungsmittel oder Trinkwasser.

Die Erfindung hat sich die Aufgabe gestellt, diese Infektionsquellen zu neutralisieren, sie also vor der Nahrungsaufnahme salmonellenfrei zu machen. In erfindungsgemäßer und wirtschaftlich vertretbarer Weise gelingt dies dadurch, daß die Lebensmittel kurzzeitig über einen Zeitraum von 0,1 s bis 100 s mit einer zwischen 10 kHz und 100 kHz liegenden Frequenz beschallt werden.

Tatsächlich hat sich bei entsprechenden Versuchen gezeigt, daß die Beschallung gerade auf diese Bakterienart einwirkt, also die gesamte Klasse der Enterobakterien, insbesondere auch die gefährlichen Salmonellen, abtötet. Wie dieser Abtötungsvorgang vor sich geht, ist im einzelnen noch nicht erforscht. Es steht jedoch zu vermuten, daß die durch die hohe Schallintensität über einen äußerst kurzen Zeitraum einwirkende sehr hohe Temperatur von einigen 1000 °C zu diesem Effekt führt. Gleichzeitig kann auch eine Deformation des Bakterienkörpers stattfinden, der daraufhin nicht mehr lebensfähig und auf jeden Fall nicht mehr teilungsfähig ist.

Das Einwirken der Ultraschalleistung kann dadurch erfolgen, daß die Lebensmittel in ein beschalltes Flüssigkeitsbad getaucht werden oder dadurch, daß sie in direkten Kontakt mit den Schallwandlern kommen. Ein sehr gutes Beispiel für die erste Anwendung sind zum Verzehr vorgesehene Eier, die unschwer über Transporteinrichtungen durch ein solches beschalltes Flüssigkeitsbad hindurchgeführt werden können. Eier können allerdings auch durch direkte Einwirkung auf die Eischale beschallt werden, wobei sowohl die außen an der Schale befindlichen Bakterien abgetötet werden, wie auch die innerhalb der Schale. Eine Veränderung der Lebensmittel war in keinem Falle zu bemerken, so daß lebensmittelrechtliche Bedenken gegen den Einsatz der Ultraschall-Sterilisation nicht bestehen dürften.

Es hat sich gezeigt, daß die Wirkung des erfindungsgemäßen Verfahrens dadurch verbessert werden kann, daß man der Flüssigkeit des Ultraschall-Reinigungsbades Ozon beigibt. Ein Ozongehalt von 8 bis 12 mg/l erwies sich als besonders vorteilhaft. Durch die Verwendung von leicht säuerlichem Wasser, beispielsweise mit einem pH-Wert von 4, als Reinigungsflüssigkeit, kann die Wirkung des erfindungsgemäßen Verfahrens nochmals verbessert werden. Bei schwach saurem Mittel sind Salmonellen anfälliger gegenüber weiteren schädlichen Faktoren als bei schwach basischen oder neutralen Mitteln. Des weiteren wird durch die Säuerung der Reinigungsflüssigkeit der Eigenverfall des Ozons verlangsamt.

Zwar werden bei einer gleichzeitigen Einwirkung von Ozon und Ultraschall gute Ergebnisse erzielt, jedoch ist eine nacheinander stattfindende Einwirkung effektiver, da sich die Abwehrkräfte der Zellen im Kampf gegen den einen Faktor erschöpfen. Nach einer bestimmten Zeit erweist sich dann die Zelle als ungeschützt gegenüber der nächsten schädlichen Einwirkung.

Durch den Ultraschall wird die Beschleunigung der Übertragung von Ionen und neutralen Teilen durch die porösen Trennwände und Zellmembranen verbessert. Das ozonhaltige Wasser hat eine hohe Toxizität für Mikroorganismen und zerfällt nach der Nutzung schnell. Des weiteren gibt es den Nahrungsmitteln einen leichten Frischegeruch.

## Patentansprüche

1. Verfahren zum Abtöten von Enterobakterien, insbesondere von Salmonellen in Lebenssmitteln,
dadurch gekennzeichnet,
daß die Lebensmittel kurzzeitig über einen Zeitraum von 0,1 s bis 100 s mit einer zwischen 10 kHz und 100 kHz liegenden Frequenz beschallt werden.

2. Verfahren nach Anspruch 1,
dadurch gekennzeichnet,
daß die Beschallung im Flüssigkeitsbad, vorzugsweise im Wasserbad erfolgt.

3. Verfahren nach Anspruch 2,
dadurch gekennzeichnet,
daß die Flüssigkeit Wasser mit einem pH-Wert von 3 bis 5, vorzugsweise 4, ist und Ozon in einer Konzentration von 5 bis 20, vorzugsweise 8 bis 12 mg/l, enthält.

4. Verfahren nach Anspruch 3,
dadurch gekennzeichnet,
daß die Lebensmittel zunächst 1 bis 3 Minuten, vorzugsweise 2 Minuten, ohne Beschallung in das Flüssigkeitsbad gelegt werden und danach für 0,5 bis 3, vorzugsweise 1 bis 2 Minuten, mit einer Frequenz von 10 bis 50 kHz, vorzugsweise 22 bis 44 kHz, beschallt werden.

5. Verfahren nach Anspruch 3,
dadurch gekennzeichnet,
daß die Beschallung im Flüssigkeitsbad während der gesamten Verweilzeit der Lebensmittel im Füssigkeitsbad erfolgt.

6. Verfahren nach Anspruch 1,
dadurch gekennzeichnet,
daß die Beschallung in direktem Kontakt des Ultraschallgebers mit dem Lebensmittel erfolgt.

7. Vorrichtung zur Durchführung des Verfahrens nach den Ansprüchen 1 oder 2,
gekennzeichnet
durch einen mit Ultraschallgebern bestückten Flüssigkeitsbehälter.

8. Vorrichtung zur Durchführung des Verfahrens nach den Ansprüchen 1 oder 3,
gekennzeichnet
durch eine der Gestaltung der Lebensmittel angepaßte, mit Ultraschallgebern verbundene Schwingplatte.
